# EUROPÄISCHE PATENTSCHRIFT

(11) **EP 0 418 735 B1**
(45) Veröffentlichungstag und Bekanntmachung des Hinweises auf die Patenterteilung: **19.01.1994**
(21) Anmeldenummer: 90117644.6
(22) Anmeldetag: 13.09.1990
(51) Int. Cl.: B65G 15/62

(54) **Gleitkörper zur Stossdämpfung und Unterstützung von Fördergurten**
Shock-absorbing support for sliding belts
Elément de support amortisseur pour courroies glissantes

(30) Priorität: 21.09.1989 DE 3931439
(43) Veröffentlichungstag der Anmeldung: 27.03.1991
(73) Patentinhaber: VSR ENGINEERING GmbH, D-45472 Mülheim/Ruhr (DE)
(72) Erfinder: Rappen, Albert Dipl.-Ing., D-45478 Mülheim/Ruhr (DE)
(74) Vertreter: Schulze Horn, Stefan, Dipl.-Ing. M.Sc.

(56) Entgegenhaltungen:
- DE-A- 3 403 877
- DE-U- 8 014 397
- FR-A- 2 090 325
- FR-A- 2 261 684
- FR-A- 2 556 818
- GB-A- 2 204 848
- US-A- 4 793 470

## Beschreibung

Die Erfindung betrifft einen Gleitkörper zur Stoßdämpfung und Unterstützung von Fördergurten, insbesondere in Förderbandübergaben, mit mindestens einem langgestreckten Grundkörper und mindestens einer Halteplatte, bei dem der Grundkörper aus einer Oberflächengleitschicht und mindestens einer elastischen Dämpfungsschicht besteht.

Wenn grobstückiges Schüttgutmaterial über Schurren auf ein Förderband aufgegeben wird, drücken die Ecken des Materials entweder den Fördergurt tief durch und beschädigen diesen oder aber die Stoßkräfte werden von den üblicherweise in gewissen Abständen angeordneten Unterstützungsrollen aufgenommen, die hierdurch beschädigt werden und daher regelmäßig ausgetauscht werden müssen.

Gerade aber auch im Bereich der Schüttgutaufgabe hängen die Seitenkanten eines Fördergurtes durch, so daß es schwer ist, die wellige Kontur des Fördergurtes gegenüber der starren Schurre durch eine elastische Schürze abzudichten, deren untere Kante dieser Kontur folgen muß.

Die aufgezeigten Probleme sind dadurch gelöst worden, daß der Fördergurt von unten durch ein elastisches, den Aufschlag dämpfendes und den Fördergurt führendes System unterstützt wird. Derartige Dämpfungs- und Unterstützungssysteme können auch verwendet werden, um gegen eine feste Grundfläche gerichtete Stöße jeder Art aufzufangen. Z.B. ist aus dem Firmenprospekt GUARDABELT, BARRES D'IMPACT, Martin Engineering Company, ein Unterstützungssystem aus elastischem Material mit einer harten, gleitfreudigen Oberfläche bekannt. Hierbei werden diese entweder durch einvulkanisierte oder eingegossene und fest mit dem Grundkörper verbundene metallische Schienen befestigt oder die Grundkörper werden auf U-förmige Metallschienen aufgeklebt oder vulkanisiert, die die starre, in Längsrichtung verlaufende und den Fördergurt tragende Rahmenkonstruktion umfassen und an dieser von der Seite her befestigt werden. Das Befestigen dieser elastischen Grundkörper auf der Halteplatte ist sehr aufwendig. Auch führt die Elastomer-Metall-Verbindung während der Herstellung häufig zu Schwierigkeiten oder sie kann sich während des Betriebes lösen.

Halteplatten oder Befestigungsschienen, die in den Grundkörper fest eingebettet werden, (S. auch US-A-4 793 470) haben eine beträchtliche Höhe, damit sie den Schraubenkopf für die Befestigung halten können. Diese Höhe vergrößert die Gesamthöhe des Gleitkörpers beträchtlich. Dadurch entsteht auch ein zu hoher Materialverbrauch an Elastomermaterial. Durch die unterschiedliche Verformungsfähigkeit der dünneren Mitten- und dickeren Randzonen, die der Grundkörper aufweisen kann, wird die Auflagekraft über die Breite unterschiedlich verteilt. Dadurch entsteht einerseits ein ungleichmäßiger Verschleiß und andererseits eine ungleiche Temperaturbeanspruchung.

Weiterhin können die Grundkörper gar nicht und die Halteplatten nur von der Seite oder von unten her gelöst werden, so daß es nicht möglich ist, Gleitkörper auf eine große Fläche, die nur von der Vorder- bzw. Querseite her zugängig ist, zu montieren.

Der Erfindung liegt daher die Aufgabe zugrunde, die aufgezeigten Nachteile zu vermeiden und einen Gleitkörper zur Stoßdämpfung und Unterstützung so auszugestalten und weiterzubilden, daß eine universelle Einsetzbarkeit und eine leicht durchzuführende Nachrüstung bzw. ein Austausch der Verschleißteile möglich wird. Darüber hinaus ist eine leichte Herstellbarkeit und eine geringe Bauhöhe erwünscht.

Der erfindungsgemäße Gleitkörper zur Stoßdämpfung und Unterstützung, bei dem die zuvor beschriebene Aufgabe gelöst ist, ist zunächst und im wesentlichen dadurch gekennzeichnet, daß der Grundkörper und die Halteplatte mit korrespondierenden Vorsprüngen bzw. Ausnehmungen versehen sind und der Grundkörper mit der Halteplatte formschlüssig und lösbar verbunden ist.

Die vorliegende Erfindung basiert auf dem Grundgedanken, den Grundkörper an der Halteplatte lösbar zu befestigen, so daß dieser als Verschleißteil oder bei sich ändernden Einsatzbedingungen, die einen anderen Grundkörperaufbau erfordern, unabhängig von der Halteplatte mit geringem Aufwand auswechselbar ist, wobei dennoch eine sichere Aufnahme der auftretenden Reibschubkräfte gewährleistet ist. Erfindungsgemäße Gleitkörper zeichnen sich u. a. durch eine geringe Bauhöhe, Verschleißungsarmut und kostengünstige Herstellbarkeit aus.

Die vorgenannten sowie die beanspruchten und in den Ausführungsbeispielen beschriebenen, erfindungsgemäß zu verwendenden Bauteile unterliegen in ihrer Größe, Formgestaltung, Materialauswahl und technischen Konzeption keinen besonderen Ausnahmebedingungen, so daß in dem jeweiligen Anwendungsgebiet bekannten Auswahlkriterien uneingeschränkt Anwendung finden können.

Es gibt nun verschiedene Möglichkeiten, die Lehre der Erfindung auszugestalten und weiterzubilden, wozu einerseits auf die Unteransprüche und andererseits auf die nachfolgende Erläuterung bevorzugter Ausführungsbeispiele des erfindungsgemäßen Gleitkörpers zur Stoßdämpfung und Unterstützung anhand der Zeichnung verwiesen wird. In der Zeichnung zeigen:
- Fig. 1: in perspektivischer, schematischer Darstellung, eine Halteplatte eines erfindungsgemäßen Gleitkörpers,
- Fig. 2: eine Stirnansicht eines erfindungsgemäßen Gleitkörpers mit nur teilweise und im Vertikalschnitt dargestelltem Grundkörper,
- Fig. 3: sehr schematisch, einen Schnitt durch einen Bereich des Gegenstandes nach Fig. 1 entlang der Linie III - III,
- Fig. 4: eine Anordnung des erfindungsgemäßen Gleitkörpers in einem ersten Ausführungsbeispiel und
- Fig. 5: eine Anordnung eines erfindungsgemäßen Gleitkörpers in einem weiteren Ausführungsbeispiel.

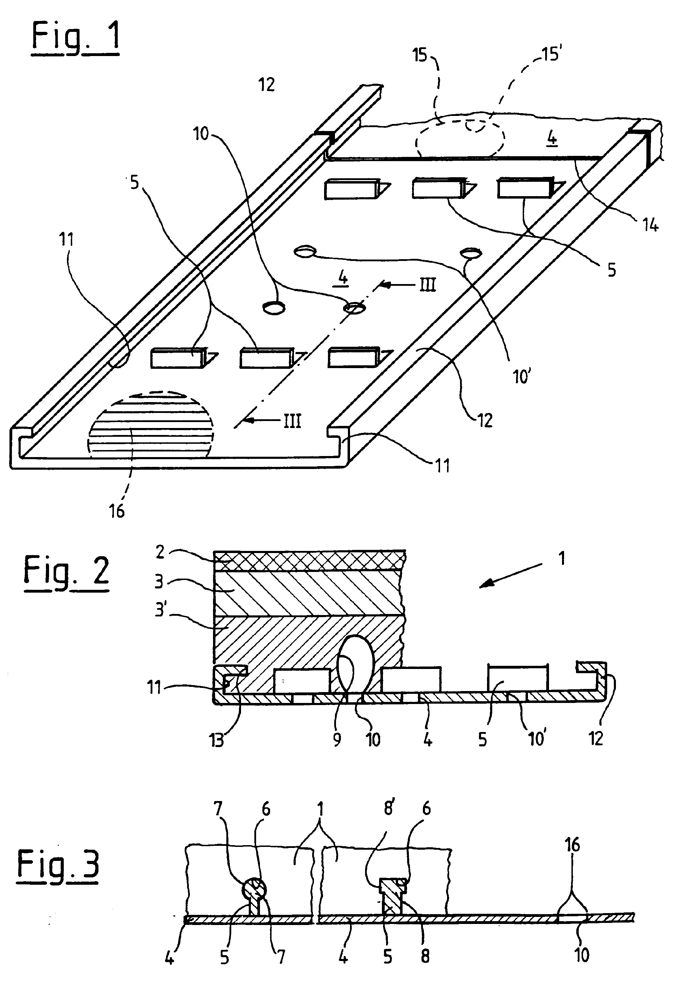

Der erfindungsgemäße Gleitkörper zur Stoßdämpfung und Unterstützung besteht zunächst aus einem Grundkörper 1, der eine Oberflächengleitschicht 2 und mindestens eine Dämpfungsschicht 3 aufweist, und aus einer Halteplatte 4. Eine solche Halteplatte 4 ist in Fig. 1 dargestellt. Sie weist als Querstege 5 ausgeführte Vorsprünge auf, die mit entsprechenden, vorzugsweise als Quernuten 6 ausgebildeten Ausnehmungen des Grundkörpers 1 korrespondieren. Erfindungsgemäß ist der Grundkörper 1 mit der Halteplatte 4 formschlüssig und lösbar verbunden. Das Einbauen des Grundkörpers erfolgt bevorzugt in der Weise, daß der Grundkörper leicht gekippt von oben eingelegt und unter elastischem Zusammendrücken der seitlichen Grundkörperkanten quer eingeschoben wird. Eine solche formschlüssige Verbindung kann u. a. dadurch unterstützt werden, daß die Vorsprünge bzw. Querstege 5 am Ende Verdickungen 7 und/oder Zähne 8 und die korrespondierenden Ausnehmungen bzw. Quernuten 6 entsprechende Hinterschnitte 7', 8' aufweisen, wie besonders deutlich aus Fig. 3 hervorgeht. Bei einer solchen Ausgestaltung des erfindungsgemäßen Gleitkörpers wird ein Verschieben zwischen Grundkörper 1 und Halteplatte 4 aufgrund der Krafteinwirkung eines über den Grundkörper 1 schleifenden Fördergurtes zuverlässig vermieden. Erfindungsgemäß ist vorgesehen, daß zunächst die Halteplatte 4 mit einer sie tragenden Tragkonstruktion verbunden und anschließend der Grundkörper 1 auf die Halteplatte 4 aufgeschoben wird.

Durch den nicht dargestellten Fördergurt findet an der Oberfläche des Grundkörpers 1 regelmäßig ein gewisser Verschleiß statt. Um diesen Verschleiß möglichst gering zu halten, besteht die Oberflächengleitschicht 2 des Grundkörpers 1 aus einem harten, verschleißwiderstandsfähigen, gleitfreudigen und elastischen Material.

Es ist vorteilhaft, daß die Dämpfungsschicht 3 des Grundkörpers 1 aus einem zelligen Elastomer besteht. Das gummielastische Verhalten eines Elastomers eignet sich dabei in besonderer Weise, die durch eine Materialaufgabe auf den Fördergurt entstehenden Stöße sicher aufzunehmen. Die Anordnung der einzelnen Zellen sollte bei dem verwendeten zelligen Elastomer vorzugsweise so gewählt sein, daß eine Kompression im wesentlichen zu keiner Verformung in Querrichtung führt. Als Elastomere eignen sich sowohl Naturkautschuk als auch verschiedenste synthetisch hergestellte Kautschukarten. Von besonderem Vorteil ist es, wenn der Grundkörper 1 mehrere, mindestens zwei verschiedene Dämpfungsschichten 3, 3', insbesondere unterschiedlicher Zelligkeit, aufweist.

Der Verschleiß des erfindungsgemäßen Gleitkörpers wird weiterhin dadurch vermindert, daß die Dämpfungsschicht 3 bzw. die Dämpfungsschichten 3, 3' an mindestens einem Ende des Grundkörpers 1 abgeschrägt oder abgerundet ausgeführt sind, um dem Fördergurt ein "sanftes Auftreffen" auf die Oberflächengleitschicht 2 des Grundkörpers 1 zu ermöglichen. Es versteht sich, daß die Oberflächengleitschicht 2 in diesem Bereich entsprechend abgewinkelt bzw. gebogen ausgeführt ist.

Nach einer weiteren Lehre der Erfindung sind in der Dämpfungsschicht 3 bzw. den Dämpfungsschichten 3, 3' des Grundkörpers 1 Längsnuten 9 vorgesehen. Diese Längsnuten 9 können einen dreieckigen oder auch einen keulenförmigen Querschnitt aufweisen, wie aus Fig. 2 näher hervorgeht. Die Längsnuten 9 dienen einerseits zur Erhöhung der Kompressibilität der unteren Dämpfungsschicht 3' des Grundkörpers 1 und andererseits zur besseren Ableitung der aufgrund der inneren Dämpfungsarbeit entstehenden Wärme. In einer besonderen Ausführungsform kann die Dämpfungsschicht statt aus einem zelligen Elastomer auch aus einem Elastomermaterial bestehen, das nur diese Längsnuten 9 hat und in deren Bereich besonders kompressibel und damit über die Höhe unterschiedlich elastisch ist. Eine weitere Ausgestaltung der Erfindung sieht vor, daß die Halteplatte 4 im Bereich der Längsnuten 9 des Grundkörpers 1 Öffnungen 10 zum Einblasen von Kühlluft aufweist. Eine solche neuartige Verfahrensweise ermöglicht erstmals eine "aktive Wärmeabfuhr" aus dem Inneren eines Gleitkörpers zur Stoßdämpfung und Unterstützung, insbesondere bei extremer Walkarbeit.

Aus Fig. 1 geht ferner hervor, daß die Halteplatte 4 Bohrungen 10' zur Aufnahme von nicht dargestellten Befestigungsmitteln an einer Tragkonstruktion aufweist. Eine derartige Verbindung ist in Fig. 4 dargestellt.

Es ist besonders zweckmäßig, daß die Halteplatte 4 zur Seitenführung und/oder zum Niederhalten des Grundkörpers 1 Längsführungen 11 aufweist. In den dargestellten und insoweit bevorzugten Ausführungsbeispielen sind diese Längsführungen 11 so ausgebildet, daß die Seitenkanten 12 doppelt abgekantet sind und in entsprechende Längsnuten 13 des Grundkörpers 1 hineinragen. Nicht dargestellt ist, daß sich die Längsführungen auch in die elastischen Seitenflächen eindrücken können. Durch die bevorzugte doppelte Abkantung wird ein Abheben des Grundkörpers 1 von der Halteplatte 4 sicher vermieden. Bei mehreren hintereinander angeordneten Halteplatten 4 ist es vorteilhaft, daß die aneinandergereihten Halteplatten 4 an ihren Stoßkanten 14 korrespondierende Vorsprünge 15 bzw. Hinterschneidungen 15' aufweisen, wie in Fig. 1 gestrichelt angedeutet ist. Damit eine Längsverschieblichkeit des Grundkörpers 1 auf der bzw. den festgelegten Halteplatten 4 zuverlässig vermieden wird, sorgen die weiter oben beschriebenen Querstege 5 bzw. Quernuten 6 für den notwendigen Formschluß, der in Quer- und in Vertikalrichtung durch die Längsführungen 11 gegeben ist. Aus Fig. 1 geht hervor, daß die Querstege als ausgestanzte Zungen ausgebildet und um etwa 90° von der Halteplatte 4 abgewinkelt sind. Es ist aber genauso denkbar, daß die Abwinklung der Querstege 5 geringer ausgebildet ist, um so ein Aufschieben des Grundkörpers 1 durch die Längsführungen 11 der Halteplatte 4 in eine Richtung zu ermöglichen. Zweckmäßigerweise entspricht diese Richtung der Fördergegenrichtung.

Um einen gleichmäßigen Halt des teilweise elastischen Grundkörpers 1 auf der Halteplatte 4 zu gewährleisten, können die Halteplatte 4 und/oder der Grundkörper 1 an ihren einander zugewandten Flächen mechanisch aufgerauht sein. Dies kann einerseits durch eine in Fig. 1 nur angedeuteten Querriffelung 16 oder durch andere Vorsprünge geschehen. Dazu ist es beispielsweise denkbar, daß beim Stanzen der Öffnungen 10 oder Bohrungen 10' ein umlaufender Grat 16' nach oben weist und zur Erhöhung der Reibung zwischen Grundkörper 1 und Halteplatte 4 dient.

Es ist besonders günstig, daß die Halteplatte 4 und der Grundkörper 1 die gleiche Breite aufweisen. Dadurch wird erreicht, daß durch Zusammenstellung einer Vielzahl erfindungsgemäßer Gleitkörper auch große Stoßdämpfungs- und Unterstützungsflächen, z. B. für Schiffsanleger, hergestellt werden können.

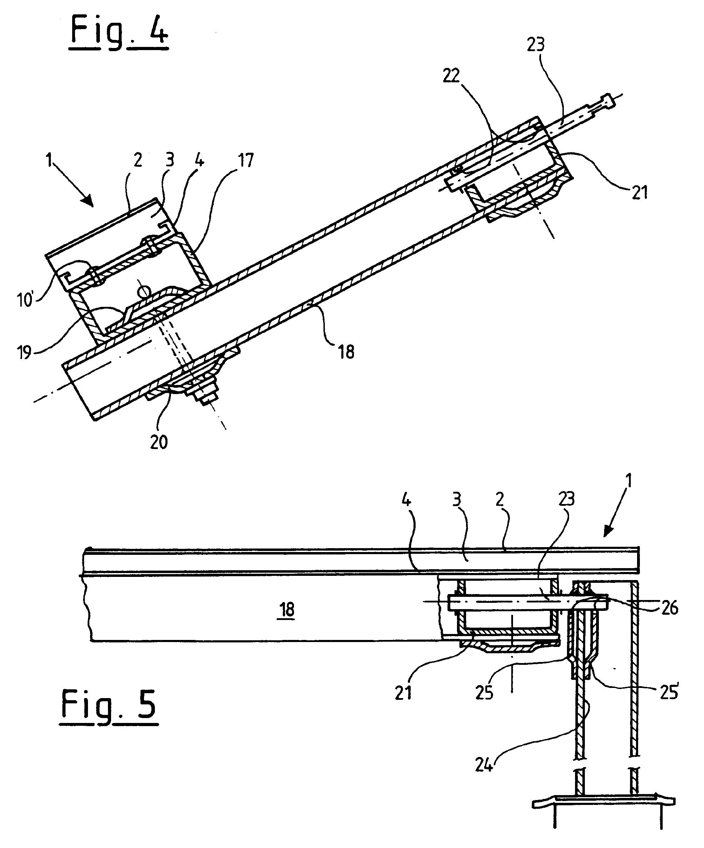

Die Fig. 4 und 5 zeigen bevorzugte Anordnungen des erfindungsgemäßen Gleitkörpers, hier mit Hilfe von Montageträgern an Förderbandübergaben. Die Biegefestigkeit des Gleitkörpers kann dadurch erreicht werden, daß die Halteplatte 4 auf einem Längsträger 17 mit hohem Biegewiderstand befestigt ist. Da in der Regel mehrere Gleitkörper nebeneinander angebracht werden, ist es zweckmäßig, daß die Längsträger 17 mit gemeinsamen Querträgern 18 verbunden sind. Für einen universellen Einsatz ist es zweckmäßig, daß der Längsträger 17 und der Querträger 18 gegeneinander in zwei Richtungen verschiebbar miteinander verbunden sind. Als Längsträger 17 und Querträger 18 dienen dazu bevorzugt C-Profile, wobei deren Verbindung mittels einer aus Druckplatte 19 und Gegenplatte 20 bestehenden Klemmvorrichtung erfolgt. Eine solche Ausgestaltung gestattet ein hohes Anpassungsvermögen an unterschiedliche Fördergurtformen und -breiten.

Aus Fig. 4 geht ferner hervor, daß der Querträger 18 an einem Ende mit einer verschiebbar aufgeklemmten Halterung 21 versehen ist, welche mehrere paarige Zapfenlöcher 22 zur Aufnahme eines Zapfens 23 aufweist. Diese zweckmäßige Ausgestaltung ermöglicht es, mehrere miteinander verbundene erfindungsgemäße Gleitkörper in die in der Tragkonstruktion vorhandenen Aufnahmen für die üblichen Förderbandrollen einzuhängen. Auf diese Weise ist ein nachträglicher Einbau von erfindungsgemäßen Gleitkörpern zur Stoßdämpfung und Unterstützung an beliebiger Stelle eines bereits verlegten Förderbandes möglich.

Schließlich ist in weiterer Ausgestaltung der Erfindung vorgesehen, daß auch jeder Längsträger 17 an seinen Enden eine Halterung 21 aufweisen kann. Eine solche, in Fig. 5 dargestellte Anordnung ermöglicht es, daß das Ende eines jeden Längsträgers 17 in entsprechende Stützen 24 drehbar eingehängt werden kann. Vorzugsweise sind dazu Platten 25, 25' mit entsprechenden Ausnehmungen 26 zur Aufnahme der Zapfen 23 vorgesehen. Dadurch wird es möglich, eine Unterstützung des muldenförmig ausgebildeten Fördergurtes zu schaffen, bei der sich die Oberflächengleitschichten 2 der erfindungsgemäßen Gleitkörper tangential an die gebogene Fördergurtunterseite anschmiegen. Eine solch elegante und ganzflächige Unterstützung war bisher - bedingt durch die Abwicklung der Rollenachse, nicht denkbar. Nicht dargestellt ist, daß zum Tragen der drehbar eingehängten Längsträger 17 ein entsprechend der Muldenform des Fördergurtes gebogen ausgeführter Querträger dienen kann.

## Patentansprüche

1. Gleitkörper zur Stoßdämpfung und Unterstützung von Fördergurten, insbesondere in Förderbandübergaben, mit mindestens einem langgestreckten Grundkörper (1) und mindestens einer Halteplatte (4), bei dem der Grundkörper aus einer Oberflächengleitschicht (2) und mindestens einer elastischen Dämpfungsschicht (3) besteht,
dadurch gekennzeichnet, daß der Grundkörper (1) und die Halteplatte (4) mit korrespondierenden Vorsprüngen bzw. Ausnehmungen versehen sind und der Grundkörper (1) mit der Halteplatte (4) formschlüssig und lösbar verbunden ist.

2. Gleitkörper nach Anspruch 1, dadurch gekennzeichnet, daß als Vorsprünge Querstege (5) auf der Halteplatte (4) und als Ausnehmungen Quernuten (6) im Grundkörper vorgesehen sind.

3. Gleitkörper nach Anspruch 1 oder 2, dadurch gekennzeichnet, daß die Vorsprünge bzw. Querstege (5) am Ende Verdickungen (7) und/oder Zähne (8) und die korrespondierenden Ausnehmungen bzw. Quernuten (6) entsprechende Hinterschnitte (7', 8') aufweisen.

4. Gleitkörper nach einem der Ansprüche 1 bis 3, dadurch gekennzeichnet, daß die Oberflächengleitschicht (2) des Grundkörpers (1) aus einem harten, verschleißwiderstansfähigen, gleitfreudigen und elastischen Material besteht.

5. Gleitkörper nach einem der Ansprüche 1 bis 4, dadurch gekennzeichnet, daß die Dämpfungsschicht (3) des Grundkörpers (1) aus einem zelligen Elastomer besteht.

6. Gleitkörper nach Anspruch 5, dadurch gekennzeichnet, daß der Grundkörper (1) mindestens zwei Dämpfungsschichten (3, 3') unterschiedlicher Zelligkeit aufweist.

7. Gleitkörper nach einem der Ansprüche 1 bis 6, dadurch gekennzeichnet, daß die Dämpfungsschicht (3, 3') an mindestens einem Ende des Grundkörpers (1) abgeschrägt oder abgerundet ausgeführt ist und daß die Oberflächengleitschicht (2) in diesem Bereich entsprechend abgewinkelt oder gebogen ausgeführt ist.

8. Gleitkörper nach einem der Ansprüche 1 bis 7, dadurch gekennzeichnet, daß in der Dämpfungsschicht (3, 3') des Grundkörpers (1) Längsnuten (9) vorgesehen sind.

9. Gleitkörper nach Anspruch 8, dadurch gekennzeichnet, daß die Halteplatte (4) im Bereich der Längsnuten (9) des Grundkörpers (1) Öffnungen (10) zum Einblasen von Kühlluft aufweist.

10. Gleitkörper nach einem der Ansprüche 1 bis 9, dadurch gekennzeichnet, daß die Halteplatte (4) zur Seitenführung und/oder zum Niederhalten des Grundkörpers (1) Längsführungen (11) aufweist, die auch als Formschlußelemente dienen können.

11. Gleitkörper nach einem der Ansprüche 1 bis 10, dadurch gekennzeichnet, daß aneinandergereihte Halteplatten (4) an ihren Stoßkanten (14) korrespondierende Vorsprünge (15) und Hinterschneidungen (15') aufweisen.

12. Gleitkörper nach einem der Ansprüche 1 bis 11, dadurch gekennzeichnet, daß die Halteplatte (49) und/oder der Grundkörper (19) an ihren einander zugewandten Flächen mechanisch aufgerauht sind.

13. Gleitkörper nach einem der Ansprüche 1 bis 12, dadurch gekennzeichnet, daß die Halteplatte (4) und der Grundkörper (1) die gleiche Breite aufweisen.

14. Gleitkörper nach einem der Ansprüche 1 bis 13, dadurch gekennzeichnet, daß die Halteplatte (4) auf einem Längsträger (17) mit hohem Biegewiderstand befestigt und mit einem Querträger (18) verbunden ist.

15. Gleitkörper nach Anspruch 14, dadurch gekennzeichnet, daß der Längsträger (17) und der Querträger (18) gegeneinander in zwei Richtungen verschiebbar miteinander verbunden sind.

16. Gleitkörper nach Anspruch 14 oder 15, dadurch gekennzeichnet, daß der Querträger (18) an beiden Enden mit einer verschiebbar aufgeklemmten Halterung (21) versehen ist.

17. Gleitkörper nach Anspruch 16, dadurch gekennzeichnet, daß die Halterung (21) mehrere paarige Zapfenlöcher (22) zur Aufnahme eines Zapfens (23) aufweist.

18. Gleitkörper nach einem der Ansprüche 14 bis 17, dadurch gekennzeichnet, daß jeder Längsträger (17) an seinen Enden eine Halterung (21) aufweist.

19. Gleitkörper nach einem der Ansprüche 14 bis 18, dadurch gekennzeichnet, daß Stützen (24) und Platten (25, 25') mit entsprechenden Ausnehmungen (26) zur Aufnahme der Zapfen (23) vorgesehen sind.

## Claims

1. Shock-absorbing support for sliding belts, particularly at belt conveyor transfers, comprising at least one elongated base member (1) and at least one support plate (4), with the base member consisting of a surface sliding layer (2) and at least one elastic absorbing layer (3),
**characterized in**
that the base member (1) and that the support plate (4) are provided with corresponding projections or recesses, respectively, and the base member (1) is interlockingly and detachably connected with the support plate (4).

2. Support according to claim 1, characterized in that cross webs (5) are provided as projections at the support plate (4) and cross grooves (6) are provided as recesses in the base member (1).

3. Support according to claim 1 to 2, characterized in that the projections or cross webs 5, respectively, comprise thickenings (7) and/or teeth (8) at the ends thereof and the corresponding recesses or cross grooves (6), respectively, comprise corresponding undercuts (7', 8').

4. Support according to one of the claims 1 to 3, characterized in that the surface sliding layer (2) of the base member (1) consists of a hard, wear resistant, well sliding, and elastic material.

5. Support according to one of the claims 1 to 4, characterized in that the absorbing layer (3) of the base member (1) consists of a cellular elastomer.

6. Support according to claim 5, characterized in that the base member (1) comprises at least two absorbing layers (3, 3') of different cellular material.

7. Support according to one of the claims 1 to 6, characterized in that the absorbing layer (3, 3') is designed skewed or rounded at at least one end of the base member (1) and that the surface sliding layer (2) is designed correspondingly angled or bent in this area.

8. Support according to one of the claims 1 to 7, characterized in that longitudinal grooves (9) are provided in the absorbing layer (3, 3') of the base member (1).

9. Support according to claim 8, characterized in that the support plate (4) in the area of the longitudinal grooves (9) of the base member (1) comprises openings (10) for blowing in cooling air.

10. Support according to one of the claims 1 to 9, characterized in that the support plate (4) comprises longitudinal guides (11) for lateral guiding and/or holding down the base member (1) which longitudinal guides (11) may also serve as interlocking elements.

11. Support according to one of the claims 1 to 10, characterized in that lined up support plates (4) comprise corresponding projections (15) and undercuts (15') at the joints (14) thereof.

12. Support according to one of the claims 1 to 11, characterized in that the support plate (49) and/or the base member (19) are mechanically roughened at the facing surfaces thereof.

13. Support according to one of the claims 1 to 12, characterized in that the support plate (4) and the base member (1) have the same width.

14. Support according to one of the claims 1 to 13, characterized in that the support plate (4) is secured at a longitudinal beam (17) with a high bending resistance and connected with a cross beam (18).

15. Support according to claim 14, characterized in that the longitudinal beam (17) and the cross beam (18) are connected with each other displaceably in two directions.

16. Support according to one of the claims 14 or 15, characterized in that the cross beam (18) is provided at both ends with a displaceably clamped fixing device (21).

17. Support according to claim 16, characterized in that the fixing device (21) comprises several paired peg holes (22) for receiving a peg (23).

18. Support according to one of the claims 14 to 17, characterized in that each longitudinal beam (17) comprises a fixing device (21) at the ends thereof.

19. Support according to one of the claims 14 to 18, characterized in that supports (24) and plates (25, 25') are provided with corresponding recesses (26) for receiving the pegs (23).

## Revendications

1. Elément de glissement pour amortir et soutenir des courroies transporteuses, en particulier dans des dispositifs de transfert à bande transporteuse, comprenant au moins un corps de base (1) allongé et au moins une plaque de support (4), élément dans lequel le corps de base est composé d'une couche superficielle de glissement (2) et d'au moins une couche élastique d'amortissement (3), **caractérisé** par le fait que le corps de base (1) et la plaque de support (2) sont pourvus de saillies et d'évidements correspondants et le corps de base (1) est relié à la plaque de support (4) par complémentarité de formes et de manière amovible.

2. Elément de glissement selon la revendication 1, **caractérisé** par le fait que des nervures transversales (5) sont prévues sur la plaque de support (4) comme saillies, et des encoches transversales (6) dans le corps de base comme évidements.

3. Elément de glissement selon la revendication 1 ou 2, **caractérisé** par le fait que les saillies ou nervures transversales (5) présentent à leur extrémité des épaississements (7) et/ou des dents (8), et les évidements ou encoches transversales (6) correspondants des contre-dépouilles (7', 8') correspondantes.

4. Elément de glissement selon l'une des revendications 1 à 3, **caractérisé** par le fait que la couche superficielle de glissement (2) du corps de base (1) est constituée d'un matériau dur, résistant à l'usure, favorisant le glissement et élastique.

5. Elément de glissement selon l'une des revendications 1 à 4, **caractérisé** par le fait que la couche d'amortissement (3) du corps de base (1) est constituée d'un élastomère cellulaire.

6. Elément selon la revendication 5, **caractérisé** par le fait que le corps de base (1) présente au moins deux couches d'amortissement (3, 3') à cellules différentes.

7. Elément selon l'une des revendications 1 à 6, **caractérisé** par le fait que la couche d'amortissement (3, 3') est biseautée ou arrondie à au moins une extrémité du corps de base (1) et que la couche superficielle de glissement (2) est coudée ou pliée de manière correspondante dans cette zone.

8. Elément de glissement selon l'une des revendications 1 à 7, **caractérisé** par le fait que des rainures longitudinales (9) sont prévues dans la couche d'amortissement (3, 3') du corps de base (1).

9. Elément de glissement selon la revendication 8, **caractérisé** par le fait que la plaque de support (4) présente dans la région des rainures longitudinales (9) du corps de base (1) des ouvertures (10) pour injecter de l'air de refroidissement.

10. Elément de glissement selon l'une des revendications 1 à 9, **caractérisé** par le fait que la plaque de support (4) présente pour le guidage latéral et/ou le serrage du corps de base (1), des guidages latéraux (11) qui peuvent également servir d'éléments d'assemblage par complémentarité de formes.

11. Elément de glissement selon l'une des revendications 1 à 10, **caractérisé** par le fait que des plaques de support (4) alignées les unes à côté des autres présentent sur leurs bords (14) des saillies (15) et des contre-dépouilles (15') correspondantes.

12. Elément de glissement selon l'une des revendications 1 à 11, **caractérisé** par le fait que la plaque de support (4) et/ou le corps de base (1) sont rendus rugueux mécaniquement sur leurs surfaces tournées l'une vers l'autre.

13. Elément de glissement selon l'une des revendications 1 à 12, **caractérisé** par le fait que la plaque de support (4) et le corps de base (1) présentent la même largeur.

14. Elément de glissement selon l'une des revendications 1 à 13, **caractérisé** par le fait que la plaque de support (4) est fixée sur un longeron (17) présentant une grande résistance à la flexion et est reliée à une traverse (18).

15. Elément de glissement selon la revendication 14, **caractérisé** par le fait que le longeron (17) et la traverse (18) sont reliés entre eux de manière à pouvoir être déplacés l'un par rapport à l'autre dans deux directions.

16. Elément de glissement selon la revendication 14 ou 15, **caractérisé** par le fait que la traverse (18) est munie aux deux extrémités d'un support (21) fixé mobile.

17. Elément de glissement selon la revendication 16, **caractérisé** par le fait que le support (21) présente plusieurs paires de perçages (22) destinés à recevoir une tige (23).

18. Elément de glissement selon l'une des revendications 14 à 17, **caractérisé** par le fait que chaque longeron (17) présente un support (21) à ses extrémités.

19. Elément de glissement selon l'une des revendications 14 à 18, **caractérisé** par le fait que des supports (24) et des plaques (25, 25') munies d'évidements (26) appropriés sont prévus pour recevoir les tiges (23).
